# EUROPÄISCHE PATENTSCHRIFT

(11) **EP 0 663 987 B1**
(45) Veröffentlichungstag und Bekanntmachung des Hinweises auf die Patenterteilung: **27.12.1996**
(21) Anmeldenummer: 93922548.8
(22) Anmeldetag: 11.10.1993
(51) Int. Cl.: F16H 37/04, F16H 3/66

(54) **ZAHNRADWECHSELGETRIEBE IN GRUPPENBAUWEISE**
TOOTHED WHEEL GEAR CHANGE BOX WITH A GROUPED DESIGN
BOITE DE VITESSES DE CONCEPTION MODULAIRE

(30) Priorität: 14.10.1992 DE 4234572
(43) Veröffentlichungstag der Anmeldung: 26.07.1995
(73) Patentinhaber: ZF FRIEDRICHSHAFEN Aktiengesellschaft, 88038 Friedrichshafen (DE)
(72) Erfinder: KUHN, Walter, D-88045 Friedrichshafen (DE); DOMIAN, Hans-Jörg, D-88090 Immenstaad (DE); BORDOWSKAY, Karl-Heinz, D-88046 Friedrichshafen (DE)
(86) Internationale Anmeldenummer: EP9302785
(87) Internationale Veröffentlichungsnummer: WO9409292

(56) Entgegenhaltungen:
- EP-A- 0 302 723
- WO-A-85/05666
- DE-A- 2 447 581
- DE-A- 3 825 733

## Beschreibung

Die Erfindung betrifft ein Zahnradwechselgetriebe in Gruppenbauweise nach dem Oberbegriff von Anspruch 1.

Vielgängige Wechselgetriebe mit großer Spreizung ermöglichen bei Kraftfahrzeugen mit Brennkraftmaschinen einerseits günstige Fahrleistungen und andererseits einen ökonomischen Kraftstoffverbrauch, da für jeden Betriebszustand des Fahrzeugs ein günstiger Arbeitsbereich der Brennkraftmaschine gewählt werden kann. Bei Personenkraftwagen sind heute automatische Zahnradwechselgetriebe in Gruppenbauweise mit vier bis fünf Gängen üblich, bei Nutzkraftfahrzeugen fünf bis sechs Gänge. Dabei ist es üblich und wünschenswert, daß die Gangsprünge zwischen den unteren Gängen größer sind als die Gangsprünge zwischen den oberen Gängen.

Die EP-B1-0 214 989 zeigt ein gattungsgemäßes Zahnradwechselgetriebe in Planetenbauweise mit einem viergängigen Grundgetriebe und einem zweigängigen Gruppengetriebe, das als Splitgetriebe ausgebildet ist und im Verlauf der Gangfolge einmal geschaltet wird. Damit ergeben sich insgesamt fünf Vorwärtsgänge. Die Schaltung des Getriebes ist relativ einfach, da immer nur entweder Schaltelemente im Grundgetriebe oder im Gruppengetriebe betätigt werden müssen.

Der Erfindung liegt die Aufgabe zugrunde, ein Zahnradwechselgetriebe in Gruppenbauweise zu schaffen, bei dem die Gangsprünge zwischen den unteren Gängen größer sind als zwischen den oberen Gängen und das insgesamt einen großen Übersetzungsbereich mit brauchbaren Gangsprüngen hat. Sie wird erfindungsgemäß bei einem Zahnradwechselgetriebe der eingangs beschriebenen Art durch die Merkmale des kennzeichnenden Teils von Anspruch 1 gelöst.

Das Gruppengetriebe nach der Erfindung arbeitet in Verbindung mit den unteren bzw. oberen Gängen als Splitgruppengetriebe, während es in Verbindung mit den mittleren Gängen als Bereichsgruppengetriebe arbeitet. Da die Gangsprünge zwischen den mittleren Gängen in der Regel annähernd gleich sind, ergibt sich für den mittleren Gangbereich eine brauchbare Gangabstufung. An diesen mittleren Bereich schließt sich nach unten ein größerer Gangsprung und nach oben ein kleinerer Gangsprung an, so daß insgesamt ein sehr vorteilhaftes Fahrzeuggetriebe entsteht. Zwar ist im mittleren Gangbereich eine Gruppenschaltung erforderlich, die mit einer Schaltung im Grundgetriebe zusammenfällt, jedoch bedeutet dies beim heutigen Stand der elektronischen Regelung kein Hinderungsgrund mehr.

Liegen die Gangsprünge im mittleren Gangbereich sehr nahe beieinander, kann in Ausgestaltung der Erfindung der Gangsprung des Gruppengetriebes gleich der n'ten Potenz eines Gangsprungs zwischen den mittleren Gängen des Grundgetriebes sein, wobei n die Anzahl der mittleren Gänge ist. Die Erfindung ist sowohl bei Getrieben in Vorgelege- als auch in Planetenbauweise oder gemischter Bauweise anwendbar.

Die Ansprüche 3 und 4 gelten für Getriebe in Planetenbauweise mit Rädersätzen für ein 6-Gang- bzw. 8-Gang-Getriebe, die besonders geeignet sind. Sie sind im Aufbau ähnlich denen nach der EP-B1-0 214 989 oder der DE-C3-24 47 581.

In der Zeichnung sind Ausführungsbeispiele der Erfindung dargestellt.

Es zeigt:
- Fig. 1: ein Räderschema von einem sechsgängigen Planetenwechselgetriebe in Gruppenbauweise;
- Fig. 2: eine Schalttabelle zu einem Getriebe nach Fig. 1;
- Fig. 3: ein Räderschema von einem achtgängigen Planetenwechselgetriebe und
- Fig. 4: eine Schalttabelle zu einem Getriebe nach Fig. 3.

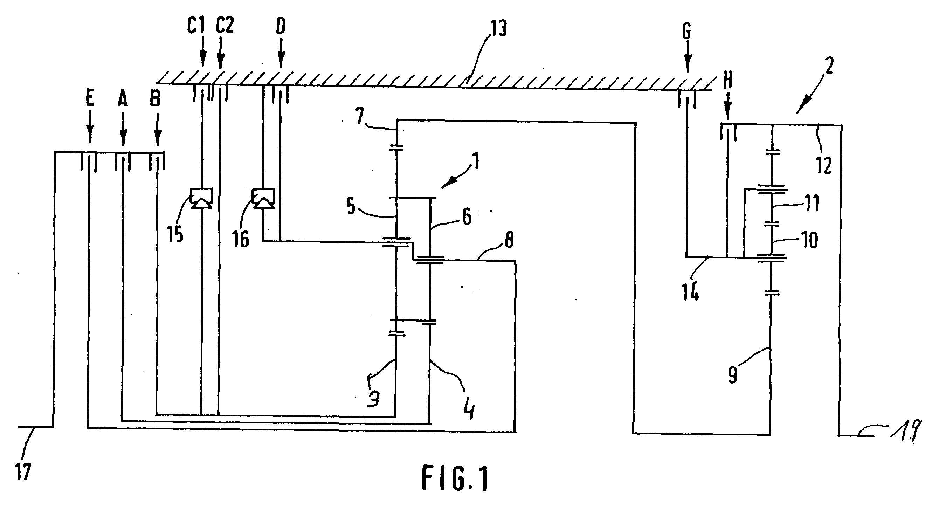

Das Planetenwechselgetriebe nach Fig. 1 hat ein Grundgetriebe 1, das aus einem reduzierten Koppelgetriebe mit einem ersten Sonnenrad 3 und einem zweiten Sonnenrad 4 sowie ersten Planetenrädern 5, die mit dem ersten Sonnenrad 3 und einem Hohlrad 7 kämmen, und mit zweiten Planetenrädern 6, die mit den ersten Planetenrädern 5 und dem zweiten Sonnenrad 4 kämmen. Die ersten und zweiten Planetenräder 5 und 6 sind auf einem gemeinsamen Steg 8 drehbar gelagert.

Das Hohlrad 7 des Grundgetriebes 1 ist mit einem Sonnenrad 9 des Gruppengetriebes 2 verbunden. Erste Planetenräder 10 kämmen einerseits mit dem Sonnenrad 9 und andererseits mit weiteren Plantenrädern 11, die ihrerseits mit einem Hohlrad 12 des Gruppengetriebes 2 kämmen. Die Planetenräder 10 und 11 sind auf einem Steg 14 gelagert.

Ein Getriebegehäuse ist mit 13 bezeichnet. Mit ihm sind über erste Bremsen C2 und C1 sowie einen Freilauf 15 das erste Sonnenrad 3 des Grundgetriebes 1 und über eine zweite Bremse D und einen parallel angeordneten zweiten Freilauf der Steg 8 und über eine dritte Bremse G der Steg 14 verbindbar.

Mit einer ersten Kupplung A kann das zweite Sonnenrad 4, mit einer zweiten Kupplung B das kleinere erste Sonnenrad 3 und mit einer dritten Kupplung E der Steg 8 mit einer Antriebswelle 17 verbunden werden. Die Antriebswelle 17 wird üblicherweise von einem nicht näher dargestellten hydrodynamischen Drehmomentwandler angetrieben.

Das Hohlrad 12 des Gruppengetriebes ist mit einer Abtriebswelle 19 verbunden und über eine vierte Kupplung mit dem Steg 14 kuppelbar.

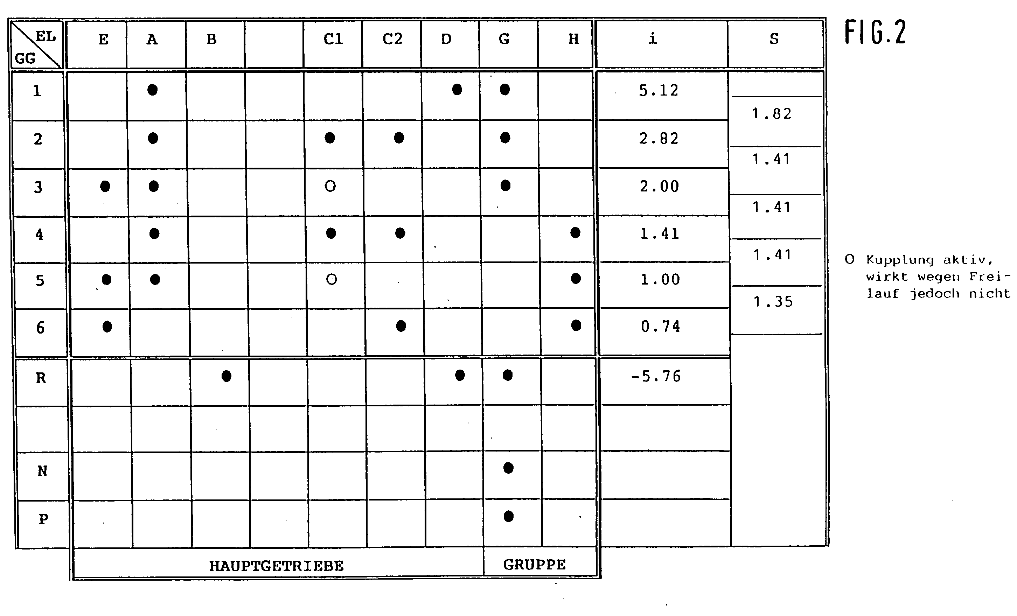

Das Getriebe wird entsprechend der Schalttabelle nach Fig. 2 geschaltet. In der linken Spalte sind die Gänge bzw. die Schaltpositionen angegeben. Rechts davon sind durch schwarze Punkte die jeweils geschlossenen Schaltelemente, Kupplungen und Bremsen durch schwarze Punkte gekennzeichnet. Daran schließen sich nach rechts die Angabe der Getriebeübersetzung i und weiter der Gangsprung s zwischen zwei Gängen an. So sind z. B. im ersten Gang die Kupplung A und die Bremsen D und G geschlossen. Damit wird eine Übersetzung i von 5,12 erreicht. Bei der Schaltung zum zweiten Gang öffnet im Grundgetriebe die Bremse D, während die Bremsen C1, C2 schließen. Im zweiten Gang ergibt sich eine Übersetzung i von 2,82, woraus sich ein Übersetzungssprung s von 1,82 errechnet.

Die Tabelle zeigt deutlich, daß der erste Übersetzungssprung vom ersten zum zweiten Gang deutlich über den Gangsprüngen im mittleren Bereich von 1,41 liegt und daß der letzte Gangsprung vom fünften zum sechsten Gang kleiner ist als die Gangsprünge im mittleren Bereich.

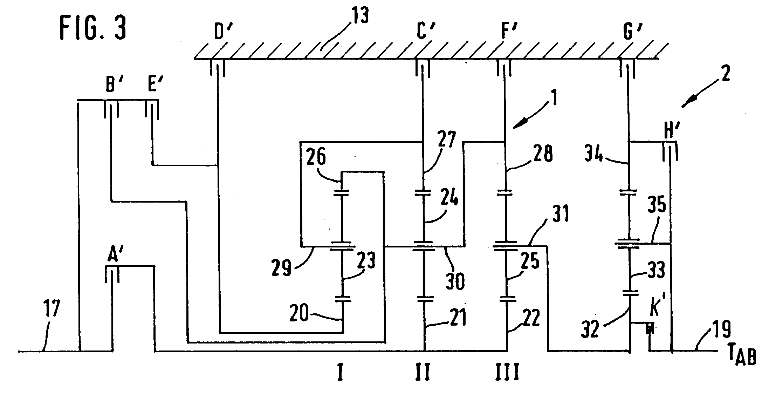

Die Fig. 3 zeigt ein 8-Gang-Automatgetriebe. Gleichwirkende Teile sind dabei mit gleichen Bezugszeichen versehen. Die Schaltelemente, Kupplungen und Bremsen sind gegenüber der Ausführung nach Fig. 1 mit einem Strich versehen. Das Grundgetriebe 1 hat drei einfache Planetenradsätze I, II und III. Die Sonnenräder der Radsätze sind mit 20, 21 und 22, die Planetenräder mit 23, 24 und 25 und die Hohlräder mit 26, 27 und 28 bezeichnet. Die Planeten 23, 24 und 25 sind auf Stegen 29, 30 und 31 gelagert.

Das Gruppengetriebe 2 nach Fig. 3 besteht aus einem einfachen Planetensatz mit einem Sonnenrad 32, einem Planetenrad 33 und einem Hohlrad 34. Obwohl in den Fig. 1 und 3 nur jeweils ein Planetenrad dargestellt ist, werden üblicherweise mehrere gleichmäßig oder ungleichmäßig über den Umfang verteilt angeordnet. Das Planetenrad 33 ist auf einem Steg 35 gelagert, der mit der Abtriebswelle 19 verbunden ist.

Mit der Antriebswelle 17 sind über die erste Kupplung A' die miteinander verbundenen Sonnenräder 21 und 22 des zweiten und dritten Planetenradsatazes II und III, ferner über die zweite Kupplung B' mit dem Steg 30 des zweiten Planetenradsatzes II sowie den Hohlrädern 26 und 28 des ersten und dritten Planetenradsatzes I und III, des weiteren mit einer dritten Kupplung E' mit dem Sonnenrad 20 des ersten Planetenradsatzes I verbunden. Der Steg 29 des Planetenradsatzes I kann zusammen mit dem Hohlrad 27 des Planetenradsatzes II durch eine erste Bremse C', der Steg 30 des zweiten Planetenradsatzes II zusammen mit dem Hohlrad 28 des dritten Planetenradsatzes III durch eine dritte Bremse F', das Sonnenrad 20 des ersten Planetenradsatzes I durch eine zweite Bremse D' und schließlich das Hohlrad 34 des Gruppengetriebes 2 durch eine vierte Bremse G' mit dem Getriebegehäuse 13 verbunden werden.

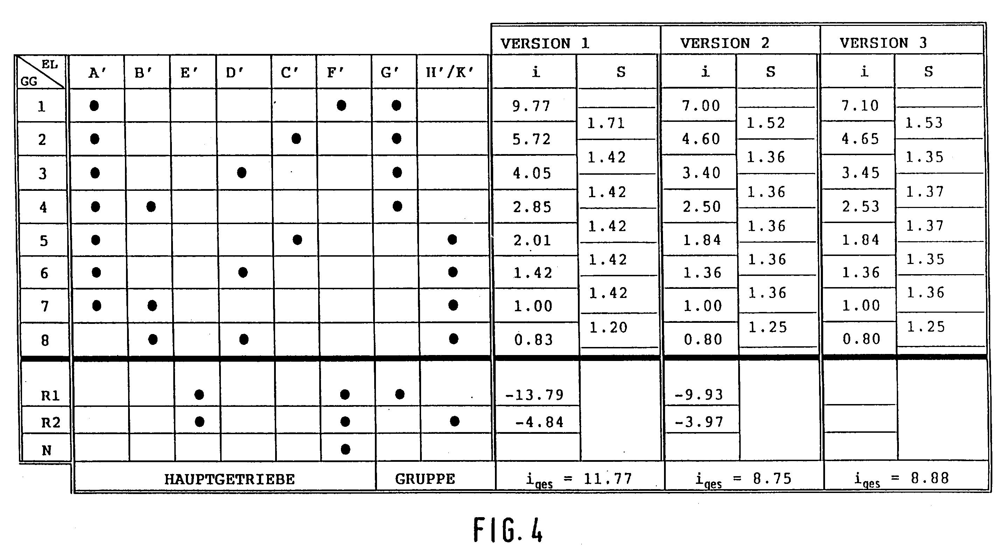

Das Getriebe nach Fig. 3 wird entsprechend der Schalttabelle gemäß Fig. 4 geschaltet, die wie die Schalttabelle nach Fig. 2 aufgebaut ist. Aus der Schalttabelle ergibt sich, daß bei einer Schaltung vom vierten in den fünften Gang und umgekehrt ein Gruppenwechsel stattfindet, d. h., daß die Bremse G' gelöst und die Kupplung H' geschlossen wird bzw. umgekehrt.

Im rechten Teil der Tabelle sind drei Versionen für die Getriebeübersetzungen angegeben. Die Versionen 1 und 2 gelten für das oben beschriebene Getriebe, während die Version 3 für ein Getriebe gilt, bei der anstelle der Kupplung H' im Gruppengetriebe eine Kupplung K' vorgesehen ist, die das Sonnenrad 32 des Gruppengetriebes mit der Abtriebswelle 19 verbindet. Der Gangsprung im Gruppengetriebe 2 ist bei der Version 1 2,85, bei der Version 2 2,50 und bei der Version 3 2,53.

Demnach liegt der Version 1 ein fünfgängiges Hauptgetriebe mit den Gangsprüngen 1,71; 1,42, 1,42 und 1,20 zugrunde. Entsprechende Werte lassen sich aus den Angaben für die Versionen 2 und 3 nach bekannten Rechenregeln ableiten.

## Patentansprüche

1. Zahnradwechselgetriebe in Gruppenbauweise mit einem vier- oder mehrgängigen Grundgetriebe (1) und einem zweigängigen Gruppengetriebe (2), wobei, ausgehend vom niedrigsten Gang des Grundgetriebes (1), ein oder mehrere aufeinanderfolgende Gänge des Grundgetriebes (1) nur mit einem Gang des Gruppengetriebes (2) und, ausgehend vom höchsten Gang des Grundgetriebes (1), ein oder mehrere sich nach unten anschießende Gänge des Grundgetriebes (1) nur mit dem anderen Gang des Gruppengetriebes (2) geschaltet werden, dadurch **gekennzeichnet**, daß die verbleibenden mittleren Gänge des Grundgetriebes (1) annähernd gleiche Gangsprünge (s) haben und mit beiden Gängen des Gruppengetriebes (s) schaltbar sind, wobei der Gangsprung (s) des Gruppengetriebes (2) annähernd gleich dem Produkt der Gangsprünge (s) zwischen den mittleren Gängen, multipliziert mit einem Gangsprung (s) zwischen den mittleren Gängen, ist.

2. Zahnradwechselgetriebe nach Anspruch 1, dadurch **gekennzeichnet,** daß der Gangsprung des Gruppengetriebes (2) gleich der n'ten Potenz eines Gangsprungs zwischen den mittleren Gängen des Grundgetriebes (1) ist, wobei n die Anzahl der mittleren Gänge ist.

3. Zahnradwechselgetriebe in Planetenbauweise nach Anspruch 1 oder 2, dadurch **gekennzeichnet,** daß das Grundgetriebe (1) aus einem reduzierten Koppelgetriebe (Ravigneaux) mit zwei Sonnenrädern (3, 4), zwei Sorten untereinander jeweils gleichen Planetenrädern (5, 6) und einem Hohlrad (7) sowie drei Kupplungen (A, B, E) und drei Bremsen (C2, D, G) besteht, wobei ein erstes Sonnenrad (4) über eine erste Kupplung (A), ein zweites Sonnenrad (3) über eine zweite Kupplung (B) und ein Steg (8) für die Planetenräder (5, 6) über eine dritte Kupplung (E) mit einer Antriebswelle (17) kuppelbar und das zweite Sonnenrad (3) über eine erste Bremse (C2) und der Steg (8) über eine zweite Bremse (D) mit dem Getriebegehäuse (13) verbindbar sind, daß das Gruppengetriebe (2) aus einem einfachen Planetensatz mit einer Sonne (9), zwei miteinander kämmenden Planeten (10, 11) und einem Hohlrad (12) besteht, wobei das Hohlrad (12) mit einer Abtriebswelle (19) verbunden ist und über eine vierte Kupplung (H) mit einem Steg (14) der Planetenräder (10, 11) kuppelbar ist und daß der Steg (14) über eine dritte Bremse (G) mit dem Getriebegehäuse (13) verbindbar ist.

4. Planetenwechselgetriebe nach Anspruch 1 oder 2, dadurch **gekennzeichnet,**
daß das Grundgetriebe (1) drei Planetenradsätze (I, II, III) aufweist mit jeweils einem Sonnenrad (20, 21, 22), einem Hohlrad (26, 27, 28) und Planetenrädern (23, 24, 25), die auf entsprechenden Stegen (29, 30', 31) gelagert sind, wobei der Steg (29) des ersten Planetenradsatzes (I) mit dem Hohlrad (27) des zweiten Planetenradsatzes (II), das Hohlrad (26) des ersten Planetenradsatzes (I) mit dem Steg (30) des zweiten Planetenradsatzes (II) und dem Hohlrad (28) des dritten Planetenradsatzes (III), das Sonnenrad (21) des zweiten Planetenradsatzes (II) mit dem Sonnenrad (22) des dritten Planetenradsatzes (III) verbunden ist,
daß das Sonnenrad (21) des zweiten Planetenradsatzes (II) über eine erste Kupplung (A'), das Hohlrad (26) des ersten Planetenradsatzes (I) über eine Kupplung (B') und das Sonnenrad (20) des ersten Planetenradsatzes (I) über eine dritte Kupplung (E') mit der Antriebswelle (17) verbindbar sind, daß das Sonnenrad (20) des ersten Planetenradsatzes (I) über eine erste Bremse (D'), das Hohlrad (27) des zweiten Planetenradsatzes (II) über eine zweite Bremse (C') und das Hohlrad (28) des dritten Planetenradsatzes (III) über eine dritte Bremse (F') mit dem Getriebegehäuse (13) verbindbar sind,
daß das Gruppengetriebe (2) aus einem einfachen Planetenradsatz mit einem Sonnenrad (32), Planeten (33), die auf einem Steg (35) gelagert sind, und einem Hohlrad (34) besteht, wobei das Sonnenrad (32) mit dem Steg (31) des dritten Planetenradsatzes (III) des Grundgetriebes (1) und der Steg (35) des Gruppengetriebes (2) mit der Abtriebswelle (19) verbunden ist sowie mit dem Hohlrad (34) oder dem Sonnenrad (32) über eine vierte Kupplung (H' oder K') kuppelbar ist,
daß das Hohlrad (34) des Gruppengetriebes (2) über eine vierte Bremse (G') mit dem Getriebegehäuse (13) kuppelbar ist.

## Claims

1. Speed-changing gear mechanism of range-group design, comprising a four or several-gear basic mechanism (1) and a two-gear range-group mechanism (2) wherein, starting from the lowest gear in the basic mechanism (1), one or several consecutive higher gears in the basic mechanism (1) can be shifted with one gear in the range-group mechanism (2) only and, starting from the highest gear in the basic mechanism (1), one or several consecutive lower gears in the basic mechanism (1) can be shifted with the other gear in the range-group mechanism (2) only, **characterised** in that the remaining middle gears in the basic mechanism (1) have almost identical ratio steps (s) and can be shifted with both gears in the range-group mechanism (2), wherein the ratio step (s) of the range-group mechanism (2) is almost identical to the sum of the ratio steps (s) between the middle gears multiplied by the jump (s) between the middle gears.

2. Speed-changing gear mechanism according to claim 1, **characterised** in that the ratio step of the range-group mechanism (2) is equal to the n'th power of a jump between the middle gears ofthe basic mechanism (1), whereby n is the total number of middle gears.

3. Speed-changing gear mechanism of planetary design according to claim 1 or 2, **characterised** in that the basic mechanism (1) comprises a reduction coupler mechanism (Ravigneaux) with two sun gears (3, 4), two types of planet gear (5, 6) and a ring gear (7), as well as three clutches (A, B, E) and three brakes (C2, D, G), wherein a first sun gear (4) can be coupled with an input shaft (17) via a first clutch (A), a second sun gear (3) via a second clutch (B) and a spider (8) for the planet gears (5, 6) via a third clutch (E), and the second sun gear (3) can be connected with the transmission housing (13) via a first brake (C2) and the spider (8) via a second brake (D), in that the range-group mechanism (2) comprises a single planetary set with one sun gear (9), two meshing planet gears (10, 11) and a ring gear (12), wherein the ring gear (12) is connected with an output shaft (19) and can be coupled with a spider (14) of the planet gears (10, 11) via a fourth clutch (H), and in that the spider (14) can be connected to the transmission housing (13) via a third brake (G).

4. Planetary speed-changing mechanism according to claim 1 or 2, **characterised** in that the basic mechanism (1) has three planetary gear sets (I, II, III), each with a sun gear (20, 21, 22), a ring gear (26, 27, 28) and planet gears (23, 24, 25) which are supported on corresponding spiders (29, 30, 31), wherein the spider (29) of the first planetary gear set (I) is connected with the ring gear (27) of the second planetary gear set (II), the ring gear (26) of the first planetary gear set (I) with the spider (30) of the second planetary gear set (II) and ring gear (28) of the third planetary gear set (III), the sun gear (21) of the second planetary gear set (II) with the sun gear (22) of the third planetary gear set (III), in that the sun gear (21) of the second planetary gear set (II) can be connected with the input shaft (17) via a first clutch (A'), the ring gear (26) of the first planetary gear set (I) via a second clutch (B') and the sun gear (20) of the first planetary gear set (I) via a third clutch (E'), in that the sun gear (20) of the first planetary gear set (I) can be connected with the transmission housing (13) via a first brake (D'), the ring gear (27) of the second planetary gear set (II) via a second brake (C') and the ring gear (28) of the third planetary gear set (III) via a third brake (F'), in that the range-group mechanism (2) comprises a single planetary gear set with a sun gear (32), planet gears (33) which are supported on a spider (35) and a ring gear (34), wherein the sun gear (32) is connected with the spider (31) of the third planetary gear set (III) in the basic mechanism (1) and the spider (35) in the range-group mechanism (2) is connected with the output shaft (19) and can be coupled with the ring gear (34) or sun gear (32) via a fourth clutch (H' or K'), in that the ring gear (34) of the range-group mechanism (2) can be coupled with the transmission housing (13) via a fourth brake (G').

## Revendications

1. Boîte de vitesses à engrenages agencée en groupes comprenant une boîte de base (1) à quatre ou plusieurs rapports et un groupe-relais (2) à deux rapports, dans laquelle, en partant de la plus petite vitesse de la boîte de base (1), un ou plusieurs rapports immédiatement supérieurs de la boîte de base (1) sont enclenchés avec une seule vitesse du groupe-relais (2), et partant de la plus grande vitesse de la boîte de base (1), un ou plusieurs rapports de la boîte de base (1) immédiatement inférieurs, ne sont enclenchés qu'avec l'autre vitesse du groupe-relais, **caractérisée** en ce que les autres vitesses intermédiaires de la boîte de base (1) ont presque le même échelonnement de vitesses (s) et sont enclenchables avec les deux vitesses du groupe-relais (s), sachant que l'échelonnement des vitesses (s) du groupe-relais (2) est presque égal au produit de l'échelonnement des vitesses (s) entre les vitesses moyennes multiplié par le saut entre les vitesses moyennes.

2. Boîte de vitesses à engrenages selon la revendication 1, **caractérisée** en ce que le saut de vitesses du groupe-relais (2) est égal à la n'ième puissance d'un saut de vitesses entre les vitesses moyennes de la boîte de base (1), où n est le nombre des vitesses moyennes.

3. Boîte de vitesses à engrenages planétaires selon la revendication 1 ou 2, **caractérisée** en ce que la boîte de base (1) comprend un réducteur à engrenages accouplés (Ravigneaux) avec deux pignons planétaires (3, 4), deux types de satellites respectivement identiques (5, 6) et une couronne (7) ainsique trois embrayages (A, B, E) et trois freins (C2, D, G), sachant qu'un premier pignon planétaire (4) peut être relié à un arbre d'entraînement (17) par un premier embrayage (A), un deuxième pignon planétaire (3) par un deuxième embrayage (B) et un étançon (8) pour les satellites (5, 6) par un troisième embrayage (E) et que le deuxième pignon planétaire (3) est connectable au carter de la boîte (13) par un premier frein (C2) et l'étançon (8) par un deuxième frein (D) en ce que le groupe-relais (2) comprend un train planétaire simple avec un pignon planétaire (9), deux satellites engrenés (10, 11) et une couronne (12), sachant que la couronne (12) est reliée à un arbre de sortie (19) et enclenchable à un étançon (14) des satellites (10, 11) par un quatrième embrayage (H) et que l'étançon (14) peut être relié au carter de la boîte (13) par un troisième frein.

4. Boîte de vitesses à engrenages planétaires selon la revendication 1 ou 2, **caractérisée** en ce que la boîte de base (1) présente trois trains planétaires (I, II, III) avec chacun un pignon planétaire (20, 21, 22), une couronne (26, 27, 28) et des satellites (23, 24, 25), logés sur les étançons correspondants (29, 30, 31), sachant que l'étançon (29) du premier train planétaire (I) est relié à la couronne (27) du deuxième train planétaire (II), la couronne (26) du premier train planétaire (I) à l'étançon (30) du deuxième train planétaire (II) et à la couronne (28) du troisième train planétaire (III) et le pignon planétaire (21) du deuxième train planétaire au pignon planétaire (22) du troisième train planétaire, en ce que le pignon planétaire (21) du deuxième train planétaire (II) peut être relié à l'arbre d'entraînement par un premier embrayage (A'), la couronne (26) du premier train planétaire (I) par un embrayage (B') et le pignon planétaire (20) du premier train planétaire (I) par un troisième embrayage (E'), en ce que le pignon planétaire (20) du premier train planétaire (I) peut être relié au carter de la boîte (13) par un premier frein (D'), la couronne (27) du deuxième train planétaire (II) par un deuxième frein (C') et la couronne (28) du troisième train planétaire (III) par un troisième frein (F'), en ce que le groupe-relais (2) comprend un train planétaire simple avec un pignon planétaire (32), des satellites (33) logés sur un étançon (35), et une couronne (34), sachant que le pignon planétaire (32) est relié à l'étançon (31) du troisième pignon planétaire (III) de la boîte de base (1) et 1' étançon (35) du groupe-relais (2) à l'arbre de sortie, ainsi qu'elle est connectable à la couronne (34) ou le pignon planétaire (32) par un quatrième embrayage (H' ou K'), en ce que la couronne (34) du groupe-relais (2) est enclenchable au carter de la boîte (13) par un quatrième frein (G').
